# EUROPEAN PATENT SPECIFICATION

(11) **EP 2 053 779 B1**
(45) Date of publication and mention of the grant of the patent: **09.11.2016**
(21) Application number: 07800946.1
(22) Date of filing: 14.08.2007
(51) Int. Cl.: H04L 12/28, H04L 29/06

(54) **A SYSTEM AND METHOD FOR AUTHENTICATING THE ACCESSING REQUEST FOR THE HOME NETWORK**
SYSTEM UND VERFAHREN ZUM AUTHENTIFIZIEREN DER ZUGRIFFSANFORDERUNG FÜR DAS HEIMNETZWERK
SYSTÈME ET PROCÉDÉ DESTINÉS À AUTHENTIFIER UNE DEMANDE D'ACCÈS POUR UN RÉSEAU LOCAL

(30) Priority: 18.08.2006 CN 200610111435
(43) Date of publication of application: 29.04.2009
(73) Proprietor: Huawei Technologies Co., Ltd., Longgang District Shenzhen, Guangdong 518129 (CN)
(72) Inventor: DING, Zhiming, Shenzhen, Guangdong 518129 (CN)
(74) Representative: Thun, Clemens
(86) International application number: PCT/CN2007/070470
(87) International publication number: WO 2008/022589

(56) References cited:
- WO-A2-03/041360
- CN-A- 1 787 513
- CN-A- 1 790 987
- US-A1- 2005 044 225
- US-A1- 2006 156 416
- US-A1- 2006 167 985

## Description

### FIELD OF THE INVENTION

Embodiments of the present invention relate to access authority management field, more particularly, to systems and methods for authorizing access request for home network.

### BACKGROUND

In order to implement remote access, a local computer is required to connect an accessed device, which is located in other geographic location through remote login. Usually, for implementing remote login, the user is required to become a legal user of the remote accessed device. For example, a user obtains a designated username, i.e. a login identifier, and a password through registration. In a process of remote login, only a user whose username exists, and the corresponding password is correct can log in to the accessed device successfully.

For a user that temporally accesses the accessed device, a method for implementing a remote access includes: the user utilizes a public account without password which usually named GUEST for registration, but access authority of the user is limited, e.g. the user may only be able to access a portion of resources that are not restricted. If the user needs to temporally access restricted resources, then the accessed device must temporally authorize the user to access, i.e. the accessed device creates, for the user, a temporary account that has a certain authority level or authority range; when the user finishes accessing the accessed device, or the account expires, the accessed device will cancel the temporary account.

In a process of implementing the present invention, the inventor found that the above prior art has at least the following three problems:

### Problem 1:

As the temporary account is owned by an uncertain user, the temporary account is easy to leak; and before the temporary account is canceled, any user that acquires the temporary account may have a certain access authority, so some negative impacts exist to security of the accessed device.

### Problem 2:

It is necessary to set information, such as access authority, validity etc. for the temporary account, which leads to inconvenience for managing the temporary account.

### Problem 3:

If a user access authority is not set in terms of a user level in a process of setting the user access authority, the process for the temporary authorization will be more complicated. For example, in the case that the access authority of each user is set in the manner as shown in Table 1, in the process of temporary authorization, it is necessary to perform a precise setting for an access object of the user that temporally accesses, or for a service required by users, so that the operation of temporary authorization becomes even more complicated.

**Table 1:**

| User name | Amending configuration of system | Reading materials | Amending materials | Deleting materials | Copying materials | ... |
|---|---|---|---|---|---|---|
| Admin | Yes | No | No | Yes | No | |
| Mickey | No | Yes | Yes | Yes | Yes | |
| Tomson | No | Yes | No | No | Yes | |
| Edison | No | Yes | Yes | No | No | |

WO 03/041360 A2 discloses a method and system for providing secure access to resources on private networks. Improved approaches for providing secure access to resources maintained on private networks are disclosed. In one embodiment, the resources being accessed can be email resources. The secure access can be provided through a public network using a standard network browser. Multiple remote users are able to gain restricted and controlled access to at least portions of a private network through a common access point. The solution provided by the improved approaches is not only easily set up and managed, but also able to support many remote users in a cost-effective manner. In the case of email resources, the solution provided by the improved approaches allows not only native access to email resources but also robust authentication approaches.

US2006/156416 A1 discloses remote access to local content using transcryption of digital rights management schemes. Methods and devices allowing distribution of content that resides in a source device on a local area network (LAN) are described. A gateway between the LAN and a wide area network (WAN) receives from a sink device a request for an instance of content. The request is sent over the WAN. Distribution of the item of content within the LAN uses a first digital rights management (DRM) protocol that prevents the item of content from being distributed outside the LAN. For the item of content, the gateway converts from the first DRM protocol to a second DRM protocol that can be used for transmitting content over the WAN. The item of content can then be forwarded to the sink device according to the second DRM protocol.

US2006/167985 A1 discloses a network-distributed data routing. Data transfer over an network is effected in a manner that facilitates the use of available communications channels and makes possible enhanced data routing control and monitoring. According to an example embodiment of the present invention, data is transferred over a network having a plurality of communication links. A home (e.g., data source) node coupled to the network supplies data for transfer on the network. A network-distributed application routing controller is implemented at a host server and at the home node, and is configured for controlling the home node for passing data on the network. A data request from a remote network access appliance, such as a laptop or mobile telephone, is received at the host server. In response to the request, the host server implements the network-distributed application routing controller to transfer data from a home node to the remote network access appliance.

### SUMMARY

Embodiments of the present invention provide a system and a method for authorizing an access request for a home network. By utilizing an authorizing proxy device to forward access request information and authorizing information, embodiments of the present invention implement an one-time authorization for a user's access to the home network, and a temporal authorization for a user's access to the home network, so as to make the authorizing operation for an access to the home network be easy and safe.

One embodiment of the present invention provides a system for authorizing an access request for a home network, including:
at least one accessed device, provided therein with a connection request managing module configured to acquire access request information of an accessing device and send the access request information;
an authorizing proxy server, configured to receive the access request information, forward the access request information, and feedback information of "authorized" to the accessed device upon receipt of information of "authorized", wherein if no reply is received or reply information of rejection for authorization is received, the authorizing proxy server is configured to feedback a message of "rejected for authorization" to the accessed device;
an authorizing device, configured to receive the access request information forwarded by the authorizing proxy server, and send the information of "authorized" to the authorizing proxy server after the authorization is determined based on the access request information, wherein if the authorizing device rejects for authorization based on the access request information, it provides no reply to the authorizing proxy server, or reply information of rejection for authorization to the authorizing proxy server.

One embodiment of the present invention provides a method for authorizing an access request for a home network, including:
receiving, by an authorizing proxy server, access request information of an accessing device that is acquired and transmitted by a accessed device;
forwarding, by the authorizing proxy server, the received access request information to an authorizing device;
feeding back, by the authorizing proxy server, information of "authorized" to the accessed device, upon the receipt of the information of "authorized" from the authorizing device by the authorizing proxy server;
the information of "authorized" is: information to be sent to the authorizing proxy server after the authorizing device determines an authorization according to the received access request information; and if no reply is received or reply information of rejection for authorization is received, the authorizing proxy server is configured to feedback a message of "rejected for authorization" to the accessed device.

It can be seen from the solutions provided by the embodiments of the present invention that an accessed device sends access request information to an authorizing proxy server, which forwards the access request information to an authorizing device and upon the receipt of authorizing information from the authorizing device, feedbacks information of "authorized" to the accessed device, and the accessed device establishes a connection with an accessing device. As such, as long as a visitor releases the connection, its authorization expires, and a re-authorization will be required upon another access. Therefore, an authorizer does not need to set accounts, passwords, etc. for visitors of the access requests, and may authorize at any moment, so that one-time authorization is implemented and the authorizing operation is made more flexible, easy and safe.

### BRIEF DESCRIPTION OF THE DRAWINGS

Figure 1 illustrates structure of an authorizing system for an access request for a home network according to an embodiment of the present invention; and
Figure 2 is a schematic diagram illustrating an authorizing process for an access request for a home network according to an embodiment of the present invention.

### DETAILED DESCRIPTION

Embodiments of the present invention forward access request information and authorizing information via an authorizing proxy device, so as to temporally authorize a visitor in an access request, especially in a remote access, and thus effectively solve the problems existed in the prior art.

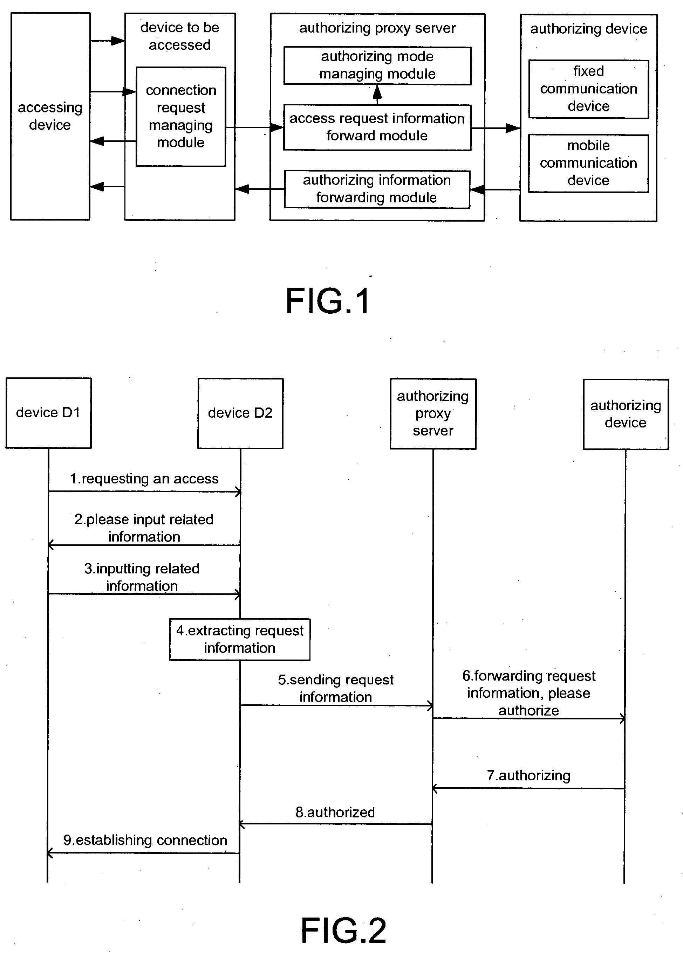

Firstly , a system according to an embodiment of the present invention is explained in detail in conjunction of Figures 1 and 2, which includes: at least one accessed device, at least one authorizing device and at least one authorizing proxy server, and a connection request managing module is provided in the accessed device; the connection request managing module is mainly used for acquiring access request information, and sending to an authorizing proxy server; i.e., the connection request managing module displays to a visitor information such as services, contents, allowed operations provided by the accessed device. When the visitor tries to access the above-mentioned accessed device via an accessing device, the connection request managing module requires the visitor to provide information, such as a true name, an access content, a required authority etc. After the connection request managing module receives an access request including the above information, the connection request managing module extracts information, such as a name of the visitor, an access content, a required authority from the above information, organizes the information to be a piece of text information or formatted information, and sends it to an authorizing proxy server, e.g. an authorizing proxy server located in a public network. After the connection request managing module sends an access request message to the authorizing proxy server, if there is no response from the authorizing proxy server received within a certain period of time, it may be treated as tiineout, the access request is directly rejected, and a message that the access has been rejected may be sent to the authorizing proxy server. This message may require no response from the authorizing proxy server.

The authorizing proxy server is mainly configured to forward the access request information sent by the connection request managing module to an authorizing device, and feedback information of authorization or it rejection to the accessed device.

The authorizing proxy server especially includes: an access request information forwarding module, an authorizing message forwarding module, and an authorizing mode managing module. These three modules are illustrated in detail below.

The authorizing mode managing module is mainly configured to store and manage information of authorizing communication mode; i.e. the authorizing proxy server may support a plurality of communication modes, and communicate with an accessing device and an authorizing device via the communication modes. Information of multiple authorizing communication modes may be simultaneously stored in the authorizing mode managing module, and the authorizing proxy server may utilize stored information of all of authorizing communication modes to send the access request information, while owner of the authorizing device may only utilize any of the authorizing communication modes to reply the authorizing information, for authorization.

The access request information forwarding module is mainly configured to receive the access request information sent by the accessed device, and forward the access request information to the authorizing device based on the information of communication modes that is stored in the authorizing mode managing module.

Upon the receipt of the access request information sent by the accessed device, the access request information forwarding module may attach a segment of prompt information behind the above information, the prompt information involving reply information applicable for authorization, and forward the access request information to the authorizing device based on the information of communication modes that is stored in the authorizing mode managing module.

The authorizing information forwarding module is mainly configured to receive the authorizing information sent by the authorizing device, and upon the receipt of the authorizing information of the authorizing device, the authorizing information forwarding module feedbacks information of authorization or rejection to the accessed device. Namely, after the authorizing device replies the authorizing information to determine an authorization, the authorizing information forwarding module, upon receipt of authorizing information from the authorizing device, sends a message of "authorized" to the accessed device. When the authorizing device replies the authorizing information to determine to reject the authorization, the authorizing information forwarding module, upon receipt of information that it is rejected for authorization from the authorizing device, sends a message of "rejected for authorization" to the accessed device.

The authorizing device is mainly configured to receive the access request information forwarded by the authorizing proxy server, and after the authorization is determined, send an authorizing information to the authorizing proxy server; namely, the authorizing device receives the access request information forwarded by the authorizing proxy server, and replies designated information to the authorizing proxy server when it is determined that it may be authorized. If the authorizing device rejects for authorization, then it may provide no reply to the authorizing proxy server, or may reply information of rejection for authorization to the authorizing proxy server.

A method according to an embodiment of the present invention is illustrated in detail below.

A process of the authorizing method according to an embodiment of the present invention includes: an accessing device requests to access an accessed device; the accessed device requests the accessing device to provide information, such as a true name, an access content, a required access authority, and upon receipt of a access request including the above information, the accessed device extracts therefrom information, such as a name of a visitor, an access content, a required access authority etc., organizes the information as a piece of text information or formatted information, and sends the organized information to the authorizing proxy server, e.g. sending to an authorizing proxy server located in a public network. After the authorizing proxy server receives this access request message, the authorizing proxy server forwards the access request message to the authorizing device according to information of communication mode that is registered on the server by the accessed device, and attaches in the forwarded message reply information for authorization. The authorizing device, upon receipt of the access request message, replies authorizing information to the authorizing proxy server, the authorizing information may be information of "authorized" or information of "rejected for authorization". When the authorizing device rejects for authorization, it may provide no reply, so as not to perform an authorization. The authorizing proxy server, upon receipt of information of "authorized" sent by the authorizing device, forwards a message of "authorized" to the accessed device. After the accessed device receives the message of "authorized", it establishes a connection with the accessing device that sends the access request, and thus the whole process for authorization is completed.

In reference to Figure 2, an implementing process of the method according to an embodiment of the present invention is illustrated in detail.

Step 1: A device D1 accesses a device D2. For example, a user U1 transmits a connection request to the device D2 in home of a user U2 by use of the device D1 of the user U1. This may be a usual process of accessing a web page via a browser, i.e. an accessed device provides an access page, and may be addressed in internet and home network, while an accessing device finds the access device through an address. Here, the D1 may be a device inside the U2's home network, or may be a device outside the U2's home network, while the U1 may be one of U2's family members, colleagues, friends etc, and the U1 does not possess an account and a password of the accessing device D2.

Step 2: The device D2 requires the device D1 to input related information. For example, the device D2 pushes an access web page to the device D1, and the access web page provided by the device D2 requires the device D1 to offer information related to the access.

The information related to the access may be personal information, such as U1's true name and address. In addition, the web page may enumerate various contents available for access in device D2 and manners for access, and the manner for displaying the contents for access may be determined by specific contents of device D2, such as a directory structure classified by picture, video, audio, text material. The directory structure may be subdivided, e.g. the picture may be further categorized into "home photo", "landscape photo", "2005's photo", etc. and the pictures may be cross-classified according to various information. As such, the authorization may be applied to browsing authority of a certain type of photos. The manners for access may be browsing, downloading, uploading, etc. The information related to the access may further include contents and manners for access to D2, which are selected by U1 via a WEB page.

Step 3: The device D1 receives related information input by the outside, and transmits the received related information to the device D2.

Step 4: The device D2 extracts access request information from the received related information. For example, the device D2, upon receipt of said related information, extracts therefrom access information, such as a name, an address, etc., and organizes the extracted request information to be a piece of access request information, which may be text information, e.g. 'the U1 requires to browse pictures in the D2', in which 'U1' is true name of a visitor, 'browse' is the manner for access selected by the U1, 'D2' is name of the device D2, 'pictures' is the contents to be accessed by the user U1, the 'pictures' may be replaced by a certain type of pictures. The access request information may also be formatted information analyzable by machines.

Step 5: The device D2 sends the access request information to an authorizing proxy server. The process may be accomplished by an IP network. If the authorizing proxy server is located in a public network, then it allows a plurality of such authorizing proxy servers to exist in the public network. Address information of the authorizing proxy server shall be provided on the device D2, to enable a connection with the server. Further, addresses of a plurality of authorizing proxy servers may be provided on the device D2, so that when the device D2 fails to connect one of the proxy servers, it may try to make a connection with another until it has connected to one of the authorizing proxy servers.

Embodiments of the present invention provide address information of the authorizing proxy servers on the device D2 by use of existing manners for setting parameters, e.g. a parameter node of address information of the authorizing proxy server is added in a data model of the device D2, and then it is configured by an auto-configuration server of a service provider for providing an authorizing proxy service, e.g. by use of TR069 or SNMP protocol etc. which will not be discussed here.

Step 6: The authorizing proxy server forwards the access request information received thereby, and requests the authorizing server to perform authorization. The authorizing proxy server may attach a segment of prompt information behind the access request information, which involves reply information applicable for authorization. For example, the prompt information may be 'reply kyfw to grant this request'. Then, the authorizing proxy server waits for a reply from the authorizing device. If the authorizing device does not reply the 'kyfw' within a certain period of time, then the authorizing proxy server may believe that this request is not accepted by the authorizing device, and the authorizing proxy server sends a message of 'rejected for access' to the device D2. The authorizing proxy server may not send the message of 'rejected for access' to the device D2, if the device does not receive authorizing information within a certain period of time, then it is confirmed that its access request is rejected.

If the access request information sent by the device D2 is formatted information, the authorizing proxy server may convert the received formatted information into text information, and then forwards the text information to the authorizing device, in order to avoid the formatted information involving some format controlling symbols. Of course, the authorizing proxy server may also directly forward the formatted information received thereby, while the process for converting from the formatted information to the text information is performed by the authorizing device.

The authorizing proxy server may support multiple communication modes, and the authorizing proxy server may forward the access request information to the authorizing device in multiple communication modes. For example, the access request information may be forwarded by SMS, IP instant message, etc. Moreover, the access request information may be forwarded in multiple modes, such as multimedia message, phone voice prompt, etc. Which communication mode is used by the authorizing proxy server may defend on authorizing communication mode of the authorizing device that is registered at the authorizing proxy server. The authorizing proxy server may be registered with a plurality of authorizing communication modes of the authorizing device, simultaneously, the authorizing proxy server may simultaneously use all of the registered authorizing communication modes to send the access request information, and the authorizing device may reply the authorizing information by use of any one of the authorizing communication modes. For example, information of the authorizing communication modes that are registered on the authorizing proxy server may be as shown in Table 2.

**Table 2**

| Owner of the accessed device | Authorizing communication mode | number/address |
|---|---|---|
| U2 | short message | 13588888888 |
| U2 | short message | 07557654321 |
| U2 | instant message | U2@huawei |
| U2 | telephone | 13588888888 |

The authorizing proxy server may be required not to know physical information of the authorizing device, but only know information of phone number, email address, ID number, etc. that is independent from the physical authorizing device. If the physical authorizing device is lost or damaged, only the number/address of the authorizing device is required to shift to a new physical authorizing device. Information, such as name, authorizing communication mode, number/address, etc., of the authorizing device on the authorizing proxy server may be updated.

Reply information in the prompt information applicable for authorization may be generated randomly by the authorizing proxy server. The authorizing proxy server may generate a different character string at a time, which may be long or short. Of course, the reply information applicable for authorization may also use fixed character, e.g. always using 'y', indicating to grant the access request. This may be determined by realizability of the authorizing proxy server. In general, the usage of random character string with a certain length may greatly reduce opportunities of error authorization, and the authorizing proxy server may make use of uniqueness of the character string to correspond with corresponding access request.

If the authorizing communication mode registered by the authorizing device is a communication mode by telephone, then the authorizing proxy server may automatically dial a registered telephone number to send the access request information via a voice module, and prompt that designated key shall be pressed to represent an authorization, another key or a hanging-up represents a rejection for authorization, and a further another key is used for replaying the access request information, etc. Alternatively, the authorizing proxy server may not regard the hanging-up as an indication of a rejection for authorization, as the hanging-up may be a misoperation. The authorizing proxy server may re-dial automatically until the authorizing device definitely indicates whether to perform authorization. Of course, the authorizing proxy server may determine that the authorizing device rejects the authorization after three consecutive hanging-ups. If the communication between the authorizing proxy server and the authorizing device may not be established, then the authorizing proxy server may deem it as a rejection for authorization, or the authorizing proxy server may re-dial many times.

Directing to one telephone number, if the authorizing device simultaneously registers authorizing communication modes of telephone/multimedia message, then the authorizing proxy server may apply a certain policy, e.g. sending a SMS/multimedia message at first, if the authorizing device does not reply the message within 10 seconds, then it dials telephone of the authorizing device.

It is necessary to explain that if the authorizing device has registered a mode of multimedia message, it doesn't mean that the authorizing device must reply a multimedia message to the authorizing proxy server to perform authorization, and the authorizing device may reply in a manner of short message.

Step 7: The authorizing device performs authorization. That is, the authorizing device replies designated information to the authorizing proxy server, e.g. replying 'kyfw' to perform authorization. If the authorizing device decides not to perform authorization, it is unnecessary to reply. If the authorizing device needs to authenticate the access request, then the authorizing device may check the access request.

Step 8: The authorizing proxy server forwards authorizing information to the device D2. For example, after the authorizing proxy server receives reply information of "authorized" of the authorizing device, an "authorized" message will be sent to the device D2. If the authorizing device performs authorization in communication modes of short message, instant message, etc., then the authorizing proxy server may check contents of the reply information of the authorizing device, so as to determine whether the reply information comprises designated information. If not, then it is ignored, the authorizing proxy server may continue waiting for authorizing information sent by the authorizing device, or it may instantly re-send the access request information to the authorizing device, to illustrate that the previous authorizing reply information is an error, and request the authorizing device to re-reply. The authorizing proxy server may change the reply information for authorization in the re-sent access request information.

Step 9: The device D2 establishes a connection with the device D1. That is, the device D2 receives a message of "authorized", then it connects with the device D1, so that the user U1 may access the device D2 via the device D1. If the device D2 does not receive the message of "authorized" for a long time, it may determine that the authorizing device rejects to perform authorization. The device D2 may actively stop the access request, and the device D2 may send information of "the access is rejected" to the device D1. Alternatively, the device d2 may, upon receipt the message of "rejected for authorization" from the authorizing proxy server, instantly stop the access request.

In the step 1 in Figure 2, if the connection request sent by the device D1 has already involve the information related to the access that is mentioned in the step 2, then the step 2 and the step 3 may be omitted, and the device D2 directly extracts the information related to the access from the connection request information, which will not be further discussed here.

Security needs to be guaranteed for the interaction between the accessed device and the authorizing proxy server and the interaction between the authorizing device and the authorizing proxy server in the embodiment of the present invention, in order to protect from counterfeit authorizing reply and message of "authorized". Such safety guarantee may be implemented by various existing technique of safety guarantee, which will not be described in the embodiment of the present invention.

In the description of the solution of Figure 2, the interaction between the devices D1 and D2 is in a manner of web, i.e., the device D1 uses a web browser to access the device D2. Embodiments of the present invention are not limited in such manner. In other word, it is possible for the device D1 to use other manners to access the device D2, e.g. the device D2 may provide with telnet and ftp services, and provide a series of commands. A telnet and ftp client is run on the device D1, so that the device D1 and the device D2 may interact with each other via a telnet and ftp protocol. The device D1 may view, download materials on the device D1 through the commands provided by the device D2. Additionally, the device D1 may upload materials to the device D2. When the device U1 hopes to log in to the device D2 and obtain some operation authority through the telnet protocol, the device D2 may use solution provided by embodiments of the present invention to remotely authorize by the authorizing device. The process for authorizing might be stepwise, i.e. it might need many times of authorization. First of all, the device D1 logs in to the device D2 via telnet commands, after the device D2 receives a login command, it requires the person that logs in to provide true name and other necessary information; and then the authorizing device utilizes the authorizing proxy server to perform an authorization once. After this authorization, the device D1 may use some viewing commands to view what contents exist on the device D2, and perform a download operation upon finding out contents wanted thereby. At this time, the device D2 pursues the authorization of the U2 again.

In the embodiments of the present invention, the accessed device may be a home gateway, and the home gateway may also be the authorizing proxy server, simultaneously. As such, the home gateway may implement a management to access authority of a whole home network.

The authorizing proxy server may also be an independent network device, i.e. not using an existing network device in the home network to implement an authorizing proxy server; at this time, the home gateway may only carry out a route function. Before a visitor doesn't get an authorization, it may only access the authorizing proxy server via the home gateway.

The authorizing proxy server may be provided in a public network, and provide an authorizing proxy service for all home networks.

Those described above are preferred embodiments of the invention, but the protection scope of the invention will not be limited therein. Those skilled in the art may easily contemplate variations or substitutes within the disclosure of the invention, which shall be covered in the protection scope of the invention. Thus, the protection scope of the invention shall be defined by claims.

## Claims

1. A system for authorizing an access request for a home network, comprising:
at least one accessed device, provided therein with a connection request managing module configured to acquire access request information of an accessing device and send the access request information;
an authorizing proxy server, configured to receive the access request information, forward the access request information, and feedback information of "authorized" to the accessed device upon receipt of information of "authorized", wherein if no reply is received or reply information of rejection for authorization is received, the authorizing proxy server is configured to feedback a message of "rejected for authorization" to the accessed device;
an authorizing device, configured to receive the access request information forwarded by the authorizing proxy server, and send the information of "authorized" to the authorizing proxy server after the authorization is determined based on the access request information, wherein if the authorizing device rejects for authorization based on the access request information, it provides no reply to the authorizing proxy server, or reply information of rejection for authorization to the authorizing proxy server.

2. The system according to claim 1, **characterized in that**, the authorizing proxy server comprises:
an authorizing mode managing module, configured to store and manage information of authorizing communication modes;
an access request information forwarding module, configured to receive the access request information sent by the accessed device and forward the access request information to the authorizing device according to the communication modes in the authorizing mode managing module;
an authorizing information forwarding module, configured to receive the authorizing information sent by the authorizing device, and feedback the information of "authorized" to the accessed device upon receipt of the information of "authorized" of the authorizing device.

3. The system according to claim 1 or 2, **characterized in that**, the authorizing communication modes supported by the authorizing proxy server comprise one or more of the following: short message/multimedia message, internet protocol, IP, instant message, telephone.

4. The system according to claim 1 or 2, **characterized in that**, the authorizing device comprises: a mobile communication terminal device or a fixed communication terminal device.

5. The system according to claim 4, **characterized in that**, the authorizing communication modes supported by the mobile communication terminal device or the fixed communication terminal device comprise one or more of the following: short message/multimedia message, internet protocol IP instant message, telephone.

6. The system according to claim 1, **characterized in that**,
the authorizing proxy server is located in a home network, and the authorizing proxy server provides authorizing proxy for the home network that it locates; or
the authorizing proxy server is located in a public network, and the authorizing proxy server provides authorizing proxy for at least one home network.

7. The system according to claim 6, **characterized in that**:
the authorizing proxy server is located in the home network; or
the authorizing proxy server is located in a network device of the public network.

8. A method for authorizing an access request for a home network, comprising:
receiving, by an authorizing proxy server, access request information of an accessing device that is acquired and transmitted by an accessed device;
forwarding, by the authorizing proxy server, the received access request information to an authorizing device;
feeding back, by the authorizing proxy server, information of "authorized" to the accessed device, upon the receipt of the information of "authorized" from the authorizing device by the authorizing proxy server; wherein,
the information of "authorized" is: information to be sent to the authorizing proxy server after the authorizing device determines an authorization according to the received access request information; and
if no reply is received or reply information of rejection for authorization is received, the authorizing proxy server is configured to feedback a message of "rejected for authorization" to the accessed device.

9. The method according to claim 8, **characterized in that**, the access request information of the accessing device acquired by the accessed device comprises:
requesting, by the accessed device, information related to the access to the accessing device, upon receipt of a connection request information sent by the accessing device;
sending, by the accessing device, the information related to the access to the accessed device according to the request of the accessed device;
extracting, by the accessed device, the access request information according to the information related to the access.

10. The method according to claim 8, **characterized in that**, the access request information of the accessing device acquired by the accessed device comprises:
sending, by the accessing device, a connection request information to the accessed device;
extracting, by the accessed device, the access request information according to the connection request information.

11. The method according to claim 9, **characterized in that**, the information related to the access comprises: name of a visitor, access content, access authority.

12. The method according to claim 8, **characterized in that**, the access request information is text information or formatted information; when the access request information is formatted information, the step of forwarding the received access request information to the authorizing device by the authorizing proxy server comprises:
converting, by the authorizing proxy server, the received access request information into text information, and forwarding the converted text information to the authorizing device; or
forwarding, by the authorizing proxy server, the received access request information to the authorizing device directly.

13. The method according to claim 8, **characterized in that**,
the step of forwarding the received access request information to an authorizing device by the authorizing proxy server comprises:
receiving, by the authorizing proxy server, the access request information sent by the accessed device, and forwarding to the authorizing device in a preset communication mode after attaching the access request information with reply information for authorization; and
the step of sending by the authorizing proxy server the information of "authorized" comprises:
sending, by the authorizing device, the information of "authorized" to the authorizing proxy server according to the reply information for authorization.

14. The method according to claim 8, **characterized in that**, the authorizing communication modes between the authorizing proxy server and the authorizing device comprise one or more of the following: short message/multimedia message, internet protocol IP instant information, telephone.

15. The method according to claim 8, **characterized in that**,
the access request information of the accessing device acquired and transmitted by the accessed device and received by the authorizing proxy server comprises:
acquiring and transmitting, by the accessed device in the home network in which the authorizing proxy server locates, the access request information of the accessing device; or
the access request information of the accessing device acquired and transmitted by the accessed device and received by the authorizing proxy server comprises:
acquiring, by the accessed device in at least one home network, the access request information of the accessing device, and transmitting the access request information to the authorizing proxy server on a public network.

## Patentansprüche

1. System zum Autorisieren einer Zugriffsanforderung für ein Heimatnetz, das Folgendes umfasst:
wenigstens eine Vorrichtung, auf die zugegriffen wird, die darin mit einem Verbindungsanforderungsmanagementmodul versehen ist, das konfiguriert ist, Zugriffsanforderungsinformationen einer zugreifenden Vorrichtung zu erfassen und die Zugriffsanforderungsinformationen zu senden;
einen Autorisierungs-Proxy-Server, der konfiguriert ist, die Zugriffsanforderungsinformationen zu empfangen, die Zugriffsanforderungsinformationen weiterzuleiten und Informationen über "autorisiert" zu der Vorrichtung, auf die zugegriffen wird, zurückzumelden nach dem Empfangen von Informationen über "autorisiert", wobei dann, wenn keine Antwort empfangen wird oder Antwortinformationen über Zurückweisung für die Autorisierung empfangen werden, der Autorisierungs-Proxy-Server konfiguriert ist, eine Nachricht über "zurückgewiesen für die Autorisierung" zu der Vorrichtung, auf die zugegriffen wird, zurückzumelden;
eine Autorisierungsvorrichtung, die konfiguriert ist, die durch den Autorisierungs-Proxy-Server weitergeleiteten Zugriffsanforderungsinformationen zu empfangen und die Informationen über "autorisiert" zu dem Autorisierungs-Proxy-Server zu senden, nachdem die Autorisierung basierend auf den Zugriffsanforderungsinformationen bestimmt ist, wobei dann, wenn die Autorisierungsvorrichtung die Autorisierung basierend auf den Zugriffsanforderungsinformationen zurückweist, sie keine Antwort für den Autorisierungs-Proxy-Server oder Antwortinformationen über die Zurückweisung für die Autorisierung für den Autorisierungs-Proxy-Server bereitstellt.

2. System nach Anspruch 1, **dadurch gekennzeichnet, dass** der Autorisierungs-Proxy-Server Folgendes umfasst:
ein Autorisierungsbetriebsartmanagementmodul, das konfiguriert ist, Informationen über Autorisierungskommunikationsbetriebsarten zu speichern und zu managen;
ein Zugriffsanforderungsinformationsweiterleitungsmodul, das konfiguriert ist, die Zugriffsanforderungsinformationen zu empfangen, die durch die Vorrichtung, auf die zugegriffen wird, gesendet werden, und die Zugriffsanforderungsinformationen gemäß den Kommunikationsbetriebsarten in dem Autorisierungsbetriebsartmanagementmodul zu der Autorisierungsvorrichtung weiterzuleiten;
ein Autorisierungsinformationsweiterleitungsmodul, das konfiguriert ist, die Autorisierungsinformationen zu empfangen, die durch die Autorisierungsvorrichtung gesendet werden, und die Informationen über "autorisiert" zu der Vorrichtung, auf die zugegriffen wird, nach dem Empfangen der Informationen über "autorisiert" der Autorisierungsvorrichtung zurückzumelden.

3. System nach Anspruch 1 oder 2, **dadurch gekennzeichnet, dass** die Autorisierungskommunikationsbetriebsarten, die durch den Autorisierungs-Proxy-Server unterstützt werden, eine oder mehrere aus den Folgenden umfassen:
Kurznachricht/Multimedianachricht, Internetprotokoll-Sofortnachricht (IP-Sofortnachricht), Telefon.

4. System nach Anspruch 1 oder 2, **dadurch gekennzeichnet, dass** die Autorisierungsvorrichtung Folgendes umfasst: eine mobile Kommunikationsendgerätevorrichtung oder eine feste Kommunikationsendgerätevorrichtung.

5. System nach Anspruch 4, **dadurch gekennzeichnet, dass** die Autorisierungskommunikationsbetriebsarten, die durch die mobile Kommunikationsendgerätevorrichtung oder die feste Kommunikationsendgerätevorrichtung unterstützt werden, eine oder mehrere aus den Folgenden umfassen: Kurznachricht/Multimedianachricht, Internetprotokoll-Sofortnachricht (IP-Sofortnachricht), Telefon.

6. System nach Anspruch 1, **dadurch gekennzeichnet, dass**
sich der Autorisierungs-Proxy-Server in einem Heimatnetz befindet und der Autorisierungs-Proxy-Server Autorisierungs-Proxy für das Heimatnetz bereitstellt, in dem er sich befindet; oder
sich der Autorisierungs-Proxy-Server in einem öffentlichen Netz befindet und der Autorisierungs-Proxy-Server Autorisierungs-Proxy für wenigstens ein Heimatnetz bereitstellt.

7. System nach Anspruch 6, **dadurch gekennzeichnet, dass**:
sich der Autorisierungs-Proxy-Server in dem Heimatnetz befindet; oder
sich der Autorisierungs-Proxy-Server in einer Netzvorrichtung des öffentlichen Netzes befindet.

8. Verfahren zum Autorisieren einer Zugriffsanforderung für ein Heimatnetz, das Folgendes umfasst:
Empfangen durch einen Autorisierungs-Proxy-Server von Zugriffsanforderungsinformationen einer zugreifenden Vorrichtung, die durch eine Vorrichtung, auf die zugegriffen wird, erfasst und übertragen werden;
Weiterleiten durch den Autorisierungs-Proxy-Server der empfangenen Zugriffsanforderungsinformationen zu einer Autorisierungsvorrichtung;
Zurückmelden durch den Autorisierungs-Proxy-Server von Informationen über "autorisiert" zu der Vorrichtung, auf die zugegriffen wird, nach dem Empfangen der Informationen über "autorisiert" von der Autorisierungsvorrichtung durch den Autorisierungs-Proxy-Server; wobei
die Informationen über "autorisiert" Folgende sind: Informationen, die zu dem Autorisierungs-Proxy-Server gesendet werden sollen, nachdem die Autorisierungsvorrichtung eine Autorisierung gemäß den empfangenen Zugriffsanforderungsinformationen bestimmt; und
falls keine Antwort empfangen wird oder Antwortinformationen über Zurückweisung für die Autorisierung empfangen werden, der Autorisierungs-Proxy-Server konfiguriert ist, eine Nachricht über "zurückgewiesen für die Autorisierung" zu der Vorrichtung, auf die zugegriffen wird, zurückzumelden.

9. Verfahren nach Anspruch 8, **dadurch gekennzeichnet, dass** die Zugriffsanforderungsinformationen der zugreifenden Vorrichtung, die durch die Vorrichtung, auf die zugegriffen wird, erfasst werden, Folgendes umfassen:
Anfordern durch die Vorrichtung, auf die zugegriffen wird, von Informationen, die sich auf den Zugriff auf die zugreifende Vorrichtung beziehen, nach dem Empfangen einer Verbindungsanforderungsinformation, die durch die zugreifende Vorrichtung gesendet wird;
Senden durch die zugreifende Vorrichtung der Informationen, die sich auf den Zugriff beziehen, zu der Vorrichtung, auf die zugegriffen wird, gemäß der Anforderung der Vorrichtung, auf die zugegriffen wird;
Extrahieren durch die Vorrichtung, auf die zugegriffen wird, der Zugriffsanforderungsinformationen gemäß den Informationen, die sich auf den Zugriff beziehen.

10. Verfahren nach Anspruch 8, **dadurch gekennzeichnet, dass** die Zugriffsanforderungsinformationen der zugreifenden Vorrichtung, die durch die Vorrichtung, auf die zugegriffen wird, erfasst werden, Folgendes umfassen:
Senden durch die zugreifende Vorrichtung einer Verbindungsanforderungsinformation zu der Vorrichtung, auf die zugegriffen wird;
Extrahieren durch die Vorrichtung, auf die zugegriffen wird, der Zugriffsanforderungsinformationen gemäß der Verbindungsanforderungsinformation.

11. Verfahren nach Anspruch 9, **dadurch gekennzeichnet, dass** die Informationen, die sich auf den Zugriff beziehen, Folgendes umfassen: Name eines Besuchers, Zugriffsinhalt, Zugriffsberechtigung.

12. Verfahren nach Anspruch 8, **dadurch gekennzeichnet, dass** die Zugriffsanforderungsinformationen Textinformationen oder formatierte Informationen sind; wobei dann, wenn die Zugriffsanforderungsinformationen formatierte Informationen sind, der Schritt zum Weiterleiten der empfangenen Zugriffsanforderungsinformationen zu der Autorisierungsvorrichtung durch den Autorisierungs-Proxy-Server Folgendes umfasst:
Umsetzen durch den Autorisierungs-Proxy-Server der empfangenen Zugriffsanforderungsinformationen in Textinformationen und Weiterleiten der umgesetzten Textinformationen zu der Autorisierungsvorrichtung; oder
Weiterleiten durch den Autorisierungs-Proxy-Server der empfangenen Zugriffsanforderungsinformationen direkt zu der Autorisierungsvorrichtung.

13. Verfahren nach Anspruch 8, **dadurch gekennzeichnet, dass**
der Schritt zum Weiterleiten der empfangenen Zugriffsanforderungsinformationen zu einer Autorisierungsvorrichtung durch den Autorisierungs-Proxy-Server Folgendes umfasst:
Empfangen durch den Autorisierungs-Proxy-Server der Zugriffsanforderungsinformationen, die durch die Vorrichtung, auf die zugegriffen wird, gesendet werden, und Weiterleiten zu der Autorisierungsvorrichtung in einer voreingestellten Kommunikationsbetriebsart nach dem Anfügen der Antwortinformationen zur Autorisierung an die Zugriffsanforderungsinformationen; und
der Schritt zum Senden durch den Autorisierungs-Proxy-Server der Informationen über "autorisiert" Folgendes umfasst:
Senden durch die Autorisierungsvorrichtung der Informationen über "autorisiert" zu dem Autorisierungs-Proxy-Server gemäß den Antwortinformationen zur Autorisierung.

14. Verfahren nach Anspruch 8, **dadurch gekennzeichnet, dass** die Autorisierungskommunikationsbetriebsarten zwischen dem Autorisierungs-Proxy-Server und der Autorisierungsvorrichtung eine oder mehrere aus den Folgenden umfassen: Kurznachricht/Multimedianachricht, Internetprotokoll-Sofortnachricht (IP-Sofortnachricht), Telefon.

15. Verfahren nach Anspruch 8, **dadurch gekennzeichnet, dass** die Zugriffsanforderungsinformationen der zugreifenden Vorrichtung, die durch die Vorrichtung, auf die zugegriffen wird, erfasst und übertragen und durch den Autorisierungs-Proxy-Server empfangen werden, Folgendes umfassen:
Erfassen und Übertragen durch die Vorrichtung, auf die zugegriffen wird, in dem Heimatnetz, in dem sich der Autorisierungs-Proxy-Server befindet, der Zugriffsanforderungsinformationen der zugreifenden Vorrichtung; oder
die Zugriffsanforderungsinformationen der zugreifenden Vorrichtung, die durch die Vorrichtung, auf die zugegriffen wird, erfasst und übertragen und durch den Autorisierungs-Proxy-Server empfangen werden, Folgendes umfassen:
Erfassen durch die Vorrichtung, auf die zugegriffen wird, in wenigstens einem Heimatnetz der Zugriffsanforderungsinformationen der zugreifenden Vorrichtung und Übertragen der Zugriffsanforderungsinformationen zu dem Autorisierungs-Proxy-Server in einem öffentlichen Netz.

## Revendications

1. Système destiné à autoriser une demande d'accès à un réseau de rattachement, comportant :
au moins un dispositif faisant l'objet de l'accès, muni intérieurement d'un module de gestion de demandes de connexion configuré pour acquérir des informations de demande d'accès d'un dispositif accédant et envoyer les informations de demande d'accès ;
un serveur mandataire d'autorisation, configuré pour recevoir les informations de demande d'accès, transmettre les informations de demande d'accès et renvoyer une information "autorisé" au dispositif faisant l'objet de l'accès suite à la réception d'une information "autorisé", le serveur mandataire d'autorisation étant configuré, si aucune réponse n'est reçue ou une information de réponse d'autorisation refusée est reçue, pour renvoyer un message "autorisation refusée" au dispositif faisant l'objet de l'accès ;
un dispositif d'autorisation, configuré pour recevoir les informations de demande d'accès transmises par le serveur mandataire d'autorisation, et envoyer l'information "autorisé" au serveur mandataire d'autorisation après que l'autorisation a été déterminée d'après les informations de demande d'accès, **caractérisé en ce que**, si le dispositif d'autorisation refuse l'autorisation d'après les informations de demande d'accès, il ne donne aucune réponse au serveur mandataire d'autorisation, ou donne une information de réponse d'autorisation refusée au serveur mandataire d'autorisation.

2. Système selon la revendication 1, **caractérisé en ce que** le serveur mandataire d'autorisation comporte :
un module de gestion de modes d'autorisation, configuré pour stocker et gérer des informations de modes de communication d'autorisation ;
un module de transmission d'informations de demande d'accès, configuré pour recevoir les informations de demande d'accès envoyées par le dispositif faisant l'objet de l'accès et transmettre les informations de demande d'accès au dispositif d'autorisation selon les modes de communication dans le module de gestion de modes d'autorisation ;
un module de transmission d'informations d'autorisation, configuré pour recevoir les informations d'autorisation envoyées par le dispositif d'autorisation, et renvoyer l'information "autorisé" au dispositif faisant l'objet de l'accès suite à la réception de l'information "autorisé" du dispositif d'autorisation.

3. Système selon la revendication 1 ou 2, **caractérisé en ce que** les modes de communication d'autorisation pris en charge par le serveur mandataire d'autorisation comportent un ou plusieurs des modes suivants : message court/message multimédia, message instantané sous protocole internet IP, téléphone.

4. Système selon la revendication 1 ou 2, **caractérisé en ce que** le dispositif d'autorisation comporte : un dispositif de terminal de communications mobiles ou un dispositif de terminal de communications fixes.

5. Système selon la revendication 4, **caractérisé en ce que** les modes de communication d'autorisation pris en charge par le dispositif de terminal de communications mobiles ou le dispositif de terminal de communications fixes comportent un ou plusieurs des modes suivants : message court/message multimédia, message instantané sous protocole internet IP, téléphone.

6. Système selon la revendication 1, **caractérisé en ce que**
le serveur mandataire d'autorisation est situé dans un réseau de rattachement, et le serveur mandataire d'autorisation agit comme mandataire d'autorisation pour le réseau de rattachement où il est situé ; ou
le serveur mandataire d'autorisation est situé dans un réseau public, et le serveur mandataire d'autorisation agit comme mandataire d'autorisation pour au moins un réseau de rattachement.

7. Système selon la revendication 6, **caractérisé en ce que** :
le serveur mandataire d'autorisation est situé dans le réseau de rattachement ; ou
le serveur mandataire d'autorisation est situé dans un dispositif de réseau du réseau public.

8. Procédé destiné à autoriser une demande d'accès à un réseau de rattachement, comportant les étapes consistant à :
faire recevoir, par un serveur mandataire d'autorisation, des informations de demande d'accès d'un dispositif accédant qui sont acquises et émises par un dispositif faisant l'objet de l'accès ;
faire transmettre, par le serveur mandataire d'autorisation, les informations reçues de demande d'accès à un dispositif d'autorisation ;
faire renvoyer, par le serveur mandataire d'autorisation, une information "autorisé" au dispositif faisant l'objet de l'accès, suite à la réception de l'information "autorisé" provenant du dispositif d'autorisation par le serveur mandataire d'autorisation ;
l'information "autorisé" étant : une information à envoyer au serveur mandataire d'autorisation après que le dispositif d'autorisation a déterminé une autorisation d'après les informations reçues de demande d'accès ; et
si aucune réponse n'est reçue ou une information de réponse d'autorisation refusée est reçue, le serveur mandataire d'autorisation est configuré pour renvoyer un message "autorisation refusée" au dispositif faisant l'objet de l'accès.

9. Procédé selon la revendication 8, **caractérisé en ce que** les informations de demande d'accès du dispositif accédant acquises par le dispositif faisant l'objet de l'accès comportent :
la demande, par le dispositif faisant l'objet de l'accès, d'informations liées à l'accès au dispositif accédant, suite à la réception d'une information de demande de connexion envoyée par le dispositif accédant ;
l'envoi, par le dispositif accédant, des informations liées à l'accès au dispositif faisant l'objet de l'accès d'après la demande du dispositif faisant l'objet de l'accès ;
l'extraction, par le dispositif faisant l'objet de l'accès, des informations de demande d'accès d'après les informations liées à l'accès.

10. Procédé selon la revendication 8, **caractérisé en ce que** les informations de demande d'accès du dispositif accédant acquises par le dispositif faisant l'objet de l'accès comportent :
l'envoi, par le dispositif accédant, d'une information de demande de connexion au dispositif faisant l'objet de l'accès ;
l'extraction, par le dispositif faisant l'objet de l'accès, des informations de demande d'accès d'après l'information de demande de connexion.

11. Procédé selon la revendication 9, **caractérisé en ce que** les informations liées à l'accès comportent : le nom d'un visiteur, un contenu d'accès, une habilitation d'accès.

12. Procédé selon la revendication 8, **caractérisé en ce que** les informations de demande d'accès sont des informations textuelles ou des informations formatées ; lorsque les informations de demande d'accès sont des informations formatées, l'étape de transmission des informations reçues de demande d'accès au dispositif d'autorisation par le serveur mandataire d'autorisation comporte :
la conversion, par le serveur mandataire d'autorisation, des informations reçues de demande d'accès en informations textuelles, et la transmission des informations textuelles converties au dispositif d'autorisation ; ou
la transmission directe, par le serveur mandataire d'autorisation, des informations reçues de demande d'accès au dispositif d'autorisation.

13. Procédé selon la revendication 8, **caractérisé en ce que**
l'étape consistant à transmettre les informations reçues de demande d'accès à un dispositif d'autorisation par le serveur mandataire d'autorisation comporte :
la réception, par le serveur mandataire d'autorisation, des informations de demande d'accès envoyées par le dispositif faisant l'objet de l'accès, et la transmission au dispositif d'autorisation dans un mode de communication prédéfini après avoir joint les informations de demande d'accès à une information de réponse pour autorisation ; et
l'étape consistant à faire envoyer, par le serveur mandataire d'autorisation, l'information "autorisé" comporte :
l'envoi, par le dispositif d'autorisation, de l'information "autorisé" au serveur mandataire d'autorisation d'après l'information de réponse pour autorisation.

14. Procédé selon la revendication 8, **caractérisé en ce que** les modes de communication d'autorisation entre le serveur mandataire d'autorisation et le dispositif d'autorisation comportent un ou plusieurs modes des suivants : message court/message multimédia, information instantanée sous protocole internet IP, téléphone.

15. Procédé selon la revendication 8, **caractérisé en ce que**
les informations de demande d'accès du dispositif accédant acquises et émises par le dispositif faisant l'objet de l'accès et reçues par le serveur mandataire d'autorisation comportent :
l'acquisition et l'émission, par le dispositif faisant l'objet de l'accès dans le réseau de rattachement dans lequel se situe le serveur mandataire d'autorisation, des informations de demande d'accès du dispositif accédant ; ou
les informations de demande d'accès du dispositif accédant acquises et émises par le dispositif faisant l'objet de l'accès et reçues par le serveur mandataire d'autorisation comportent :
l'acquisition, par le dispositif faisant l'objet de l'accès dans au moins un réseau de rattachement, des informations de demande d'accès du dispositif accédant, et l'émission des informations de demande d'accès au serveur mandataire d'autorisation sur un réseau public.
